# EUROPÄISCHE PATENTANMELDUNG

(11) **EP 3 441 832 A1**
(43) Veröffentlichungstag der Anmeldung: **13.02.2019**
(21) Anmeldenummer: 17185109.0
(22) Anmeldetag: 07.08.2017
(51) Int. Cl.: G05B 19/05, H04B 3/54

(54) **MODULARE SPEICHERPROGRAMMIERBARE STEUERUNG**

(71) Anmelder: Wieland Electric GmbH, 96052 Bamberg (DE)
(72) Erfinder: Uygur, Sinan, 91301 Forchheim (DE)
(74) Vertreter: 2K Patentanwälte Blasberg Kewitz & Reichel

(57) **Zusammenfassung**

Eine Modulare speicherprogrammierbare Steuerung (1, 101, 201), umfassend eine Mehrzahl von Modulen (2, 4, 6, 8, 10, 102, 104, 106, 108, 110, 202, 204, 206, 208, 210), wobei die Module (2, 4, 6, 8, 10, 102, 104, 106, 108, 110, 202, 204, 206, 208, 210)zum Austausch von Datentelegrammen untereinander ausgebildet sind, wobei die Module (2, 4, 6, 8, 10, 102, 104, 106, 108, 110, 202, 204, 206, 208, 210) jeweils einen Stromversorgungsanschluss (12, 14, 16, 18, 20, 112, 114, 116, 118, 120, 212, 214, 216, 218, 220) aufweisen, soll eine besonders hohe Anzahl von Modulen und eine besonders hohe Datenübertragungsgeschwindigkeit zwischen den Modulen ermöglichen. Dazu weisen die Module (2, 4, 6, 8, 10, 102, 104, 106, 108, 110, 202, 204, 206, 208, 210) jeweils eine Modulationsvorrichtung (38, 40, 42, 44, 46, 138, 140, 142, 144, 146, 238, 240, 242, 244, 246) auf, die zum Modulieren und Demodulieren der Datentelegramme über eine Trägerfrequenz auf eine Spannung zwischen zwei Leitungen (24, 26, 124, 126, 224, 225, 226) des Stromversorgungsanschlusses (12, 14, 16, 18, 20, 112, 114, 116, 118, 120, 212, 214, 216, 218, 220) ausgebildet ist.

## Beschreibung

Die Erfindung betrifft eine modulare speicherprogrammierbare Steuerung, umfassend eine Mehrzahl von Modulen, wobei die Module zum Austausch von Datentelegrammen untereinander ausgebildet sind, wobei die Module jeweils einen Stromversorgungsanschluss aufweisen.

Eine speicherprogrammierbare Steuerung (SPS, englisch: Programmable Logic Controller, PLC) ist ein Gerät, das zur Steuerung oder Regelung einer Maschine oder Anlage eingesetzt und auf digitaler Basis programmiert wird. Sie weist im einfachsten Fall Anschlussklemmen (als Eingänge und/oder Ausgänge), ein Betriebssystem (Firmware) und eine Schnittstelle, über die das Anwenderprogramm geladen werden kann, auf. Das Anwenderprogramm legt fest, wie die Ausgänge in Abhängigkeit von den Eingängen geschaltet werden sollen. Das Betriebssystem (Firmware) stellt dabei sicher, dass dem Anwenderprogramm immer der aktuelle Zustand der an die Eingänge angeschlossenen Sensoren zur Verfügung steht. Anhand dieser Informationen kann das Anwenderprogramm die Ausgänge so schalten (und damit die dort angeschlossenen Aktoren so steuern), dass die Maschine oder die Anlage in der gewünschten Weise funktioniert.

Die Anbindung der SPS an die Maschine bzw. Anlage erfolgt mittels der bereits erwähnten Sensoren und Aktoren. Die Sensoren sind an die Eingänge der SPS geschaltet und vermitteln der SPS das Geschehen in der Maschine oder Anlage. Beispiele für Sensoren sind z. B. Taster, Lichtschranken, Inkrementalgeber, Endschalter, oder auch Temperaturfühler, Füllstandssensoren etc. Die Aktoren sind an den Ausgängen der SPS angeschlossen und bieten die Möglichkeit, die Maschine oder Anlage zu steuern. Beispiele für Aktoren sind Schütze zum Einschalten von Elektromotoren, elektrische Ventile für Hydraulik oder Druckluft, aber auch Module für Antriebssteuerungen (Motion Control, Drehzahlsteuerung mit kontrollierter Beschleunigung oder Verzögerung, Schrittmotorsteuerungen).

Weit verbreitet sind heutzutage modulare Lösungen, bei denen die SPS aus einzelnen Steckmodulen zusammengesetzt ist. Diese können auch in Untergruppen angeordnet sein oder durch ein gemeinsames Gehäuse nach außen gesehen als ein Gerät erscheinen. Derartige modulare Systeme lassen sich durch Hinzufügen von Modulen erweitern, wenn etwa mehr Eingänge oder Ausgänge gewünscht werden oder bestimmte Funktionalitäten gewünscht werden. Mit spezialisierten Modulen, z. B. einem Modul mit einer seriellen Schnittstelle, lassen sich auch Komponenten wie z. B. Wetterstationen integrieren. Eine Verarbeitung analoger Eingangssignale, komplexe Regelungsmodule und zahlreiche weitere Module können ergänzt werden.

Die Module der SPS sind dabei in der Regel über proprietäre Bussysteme oder Feldbussysteme verbunden, die physikalisch als Rückwandbus oder Baugruppenträger realisiert sind. Der Rückwandbus umfasst eine Vielzahl physikalischer Datenleitungen, die die einzelnen Module untereinander verbinden und zur Übertragung der Datentelegramme zwischen den Modulen dienen. Er kann auch Leitungen für die Stromversorgung der Module umfassen, so dass der Busanschluss jedes Moduls gleichzeitig den Stromversorgungsanschluss darstellt. Alternativ können die Module über einen separaten Stromversorgungsanschluss an eine Stromversorgung im Schaltschrank angeschlossen sein (in der Regel +24 V Gleichstrom).

Problematisch ist hierbei, dass -je nach verwendetem Datenprotokoll - die Anzahl der Datenleitungen auf dem Bus die Anzahl der möglichen Module limitiert. Auch ist die Datenübertragungsgeschwindigkeit auf dem Bus häufig sehr gering.

Es ist daher Aufgabe der Erfindung, eine modulare speicherprogrammierbare Steuerung der eingangs genannten Art anzugeben, die eine besonders hohe Anzahl von Modulen und eine besonders hohe Datenübertragungsgeschwindigkeit zwischen den Modulen ermöglicht.

Diese Aufgabe wird erfindungsgemäß gelöst, indem die Module jeweils eine Modulationsvorrichtung aufweisen, die zum Modulieren und Demodulieren der Datentelegramme über eine Trägerfrequenz auf eine Spannung zwischen zwei Leitungen des Stromversorgungsanschlusses ausgebildet ist.

Die Erfindung geht dabei von der Überlegung aus, dass eine besonders hohe Anzahl von Modulen ermöglicht werden könnte, indem eine Busstruktur für die Modulkommunikation verwendet wird, die hinsichtlich der Breite, der Anordnung der Module und der Geschwindigkeit besonders flexibel ist. Dies könnte z.B. erfolgen, indem zusätzliche Datenleitungen vorgesehen werden, die die Module verbinden. Dies würde allerdings einen zusätzlichen mechanischen Aufbau mit der entsprechenden Komplexität und entsprechendem Materialbedarf bedingen. Stattdessen wurde erkannt, dass - beim häufigen Aufbau einer SPS in einem Schaltschrank - ohnehin häufig eine gemeinsame Stromversorgung für die Module der SPS vorgesehen ist. Diese kann ebenfalls zur Übertragung von Daten genutzt werden, indem eine Nutzung der Trägerfrequenztechnik (auch: Modulationstechnik) erfolgt: Die Datentelegramme werden in geeignet aufbereiteter Signalform durch eine Modulationsvorrichtung über eine Trägerfrequenz auf eine Spannung zwischen zwei Leitungen der Stromversorgung aufmoduliert. Eine Trägerfrequenz ist hierbei als mindestens eine Trägerfrequenz zu verstehen, da auch mehrere Trägerfrequenzen verwendet werden können. Das empfangende Modul demoduliert die Signalform mit einer ebensolchen Modulationsvorrichtung und erhält so das Datentelegramm.

In einer ersten vorteilhaften Ausgestaltung des Verfahrens umfasst die Mehrzahl von Modulen der speicherprogrammierbaren Steuerung wenigstens ein Kopfmodul, das einen Prozessor aufweist, der logische Eingangssignale von Sensoren verknüpft und logische Ausgangssignale für Aktoren erzeugt. Das Kopfmodul enthält also die Logik der Steuerung, die bestimmt, wie die Ausgänge abhängig von den Signalen an den Eingängen zu schalten sind. Hierfür sollte das Kopfmodul zum einen eine geeignete Firmware auf dem Prozessor enthalten, zum anderen eine Schnittstelle für den Empfang der durch den Benutzer in der Regel auf einem Personal Computer erstellte Logikprogrammierung.

In zusätzlicher oder alternativer vorteilhafter Ausgestaltung umfasst die Mehrzahl von Modulen wenigstens ein Erweiterungsmodul, das eine Anzahl von Anschlussklemmen aufweist und an den Anschlussklemmen erfasste physikalische Eingangssignale von Sensoren in logische Eingangsignale umsetzt und/oder an den Anschlussklemmen physikalische Ausgangssignale aus logischen Ausgangssignalen erzeugt. Mit derartigen Erweiterungsmodulen ist es möglich, die Anzahl von verfügbaren Anschlussklemmen für Sensoren bzw. Aktoren zu erhöhen, so dass zusätzliche Informationen erhalten bzw. zusätzliche physikalische Steuersignale ausgegeben werden können. In den Erweiterungsmodulen werden die logischen, in der Regel digitalen Signale in physikalische Signale, d.h. Spannungen umgesetzt und umgekehrt.

Die zwischen den Modulen per Auf-/Demodulation ausgetauschten Datentelegramme enthalten dabei vorteilhafterweise die logischen Eingangssignale und/oder logischen Ausgangssignale.

In weiterer zusätzlicher oder alternativer vorteilhafter Ausgestaltung umfasst die Mehrzahl von Modulen wenigstens ein Erweiterungsmodul, das eine Anzahl von Anschlussklemmen aufweist und an den Anschlussklemmen erfasste physikalische Eingangssignale mittels der Modulationsvorrichtung in die Datentelegramme moduliert, wobei die Datentelegramme die physikalischen Eingangssignale enthalten, und wobei die Mehrzahl von Modulen wenigstens ein Kopfmodul umfasst, das einen Prozessor aufweist, der die aus den Datentelegrammen demodulierten physikalischen Eingangssignale in logische Eingangsignale umsetzt. Mit anderen Worten: Die Vorverarbeitung der Eingangssignale erfolgt nicht im Erweiterungsmodul, sondern das physikalische oder analoge Signal wird weitgehend unverändert zum Kopfmodul übertragen, so dass die Vorverarbeitung im Kopfmodul stattfinden kann. Dadurch kann das Erweiterungsmodul technisch einfacher aufgebaut werden. Dies wird ermöglicht durch den Geschwindigkeitsvorteil, den ein Powerline-Rückwandbus bereitstellt.

In noch weiterer zusätzlicher oder alternativer vorteilhafter Ausgestaltung umfasst die Mehrzahl von Modulen wenigstens ein Kommunikationsmodul, das eine Kommunikationsschnittstelle für Kommunikationssignale zu und von einem Feldbussystem aufweist. Solche Feldbussysteme sind in der Norm IEC 61158 standardisiert und sind in einer industriellen Anlage häufig vorhanden. Es ist daher von Vorteil, wenn die SPS mit einem vorhandenen Feldbussystem kommunizieren kann.

Die zwischen den Modulen der SPS per per Auf-/Demodulation ausgetauschten Datentelegramme enthalten dabei vorteilhafterweise die Kommunikationssignale zu und von dem Feldbussystem. Unter Umständen können diese Modulations-/Demodulationsverfahren ein Teil bzw. eine Datenübertragungsschicht innerhalb dieser Feldbussysteme werden. Dabei können die oberen Schichtstrukturen wie z.B. ISO/OSI gleich bleiben.

In weiterer vorteilhafter Ausgestaltung sind die Module in einer Modulreihe angeordnet. Hierdurch lassen sich die Module übersichtlich in einem Schaltschrank anordnen. Eine Verbindung der Module in der Reihe kann z.B. über eine Steckverbindung erfolgen.

Grundsätzlich können verschiedene Modulationsverfahren angewendet werden, z.B. Amplitudenmodulation, Frequenzmodulation, Bandspreizmodulation, Pulsmodulation, ASK (Amplitude Shift Keying), FSK (Frequenz Shift Keying), PSK (Phase Shift Keying) oder QAM (Quadraturamplitudenmodulation) Besonders vorteilhaft ist die Modulationsvorrichtung jedoch zum Modulieren und Demodulieren mittels des Orthogonalen Frequenzmultiplexverfahrens ausgebildet ist. Bei diesem Verfahren werden mehrere orthogonale Träger zur Signalübertragung verwendet, so dass die Datenraten dieser mehreren Träger sich zu einer hohen Datenrate addieren. Das OFDM-Verfahren ermöglicht so eine besonders schnelle Signalübertragung mit einer Nutzdatenrate von bis zu 300 MB/s.

In zweckmäßiger Weiterbildung ist die modulare speicherprogrammierbare Steuerung zum gemäß einer Sicherheitsnorm sicheren Ein- und Ausschalten eines elektrischen Verbrauchers ausgebildet. Eine derartig ausgebildete SPS wird auch als Sicherheitssteuerung bezeichnet und eignet sich dazu, im industriellen Bereich bei Maschinen und deren Steuerung eine Sicherheitsfunktion bereitzustellen, d.h. eine Sicherstellung einer störungsfreien und insbesondere gefahrenfreien Funktion von Maschinen, die Gefahrenpotential für Mensch und Material bergen, d.h. z.B. Pressen, Fräswerkzeuge etc. Die wichtigsten Normen im Bereich der Maschinensicherheit sind die IEC 61508, die EN 62061 und die EN ISO 13849-1.

In Bezug auf Sicherheitssteuerungen stellt sich dabei die Frage der sicheren Übertragung von Datentelegrammen zwischen einzelnen Modulen der Sicherheitssteuerung. In einer ersten vorteilhaften Ausgestaltung sind hierzu die Datentelegramme nach einem gemäß der Sicherheitsnorm sicheren Datenprotokoll ausgebildet. Das bedeutet, dass die Sicherheit auf den Schichten 5 bis 7 des OSI-Schichtmodells gewährleistet wird, d.h. durch zusätzliche komplexe Verfahren auf Protokollebene. Beispiele hierfür sind die Protokolle CIP Safety, FSoE oder PROFIsafe. Bei letzterem wird beispielsweise eine fortlaufende Nummerierung von Datentelegrammen, eine Vorgabe einer Zeiterwartung mit Quittierung, eine Kennung für Sender und Empfänger und eine zusätzliche Datensicherung per CRC (Cyclic Redundancy Check) realisiert, um die sichere Übertragung zu gewährleisten.

In einer zweiten, alternativen vorteilhaften Ausgestaltung umfasst der Stromversorgungsanschluss mindestens drei Leitungen, und die Modulationsvorrichtung ist dazu ausgebildet, eine erste von zwei redundanten Versionen eines Datentelegramms auf eine Spannung zwischen einer ersten Leitung und einer zweiten Leitung der Stromversorgung zu modulieren und/oder aus einer solchen Spannung zu demodulieren, und eine zweite Version des Datentelegramms auf eine Spannung zwischen einer dritten Leitung und einer beliebigen weiteren Leitung der Stromversorgung zu modulieren und/oder aus einer solchen Spannung zu demodulieren. Mit anderen Worten: Die funktionale Sicherheit wird in dieser Alternative nicht auf den oberen Schichten 5 bis 7 des OSI-Schichtmodells gewährleistet, sondern bereits auf Basis des Übertragungsmediums, d.h. auf den Schichten 1 und 2 des OSI-Schichtenmodells. Hierfür wird die Methode der überwachten Redundanz angewandt, bei der die zu übertragenden Daten redundant erzeugt werden (z.B. indem ein Sensor zwei unabhängige Datenquellen bereithält, die an separaten Anschlussklemmen), die zu redundanten Versionen des jeweiligen Datentelegramms führen. Die redundanten Daten sollten dabei auf separaten Hardwarekanälen übertragen werden. Hierzu sollte die Stromversorgung mindestens drei Leitungen umfassen, z.B. durch eine zusätzliche Gleichstromversorgungsleitung. Dadurch stehen mehrere unabhängige Potentialdifferenzen oder Spannungen zur Verfügung, auf die das Datentelegramm aufmoduliert werden kann. In einer derartigen Architektur sollte die erste Version des Datentelegramms auf eine Spannung zwischen einer ersten Leitung und einer zweiten Leitung der Stromversorgung moduliert werden, und die zweite Version des Datentelegramms auf eine Spannung zwischen einer dritten Leitung und einer beliebigen weiteren Leitung der Stromversorgung moduliert werden. Die beliebige Leitung muss dabei von der dritten Leitung unterschiedlich sein - sonst wäre keine Spannung ermittelbar. Mit anderen Worten: Es werden unterschiedliche Leitungen für die unterschiedlichen redundanten Versionen eines Datentelegramms verwendet.

Vorteilhafterweise ist dabei der Stromversorgungsanschluss als Gleichstromversorgungsanschluss ausgelegt und die erste Leitung ist ein erster Außenleiter, die zweite Leitung ein Neutralleiter, die dritte Leitung ein zweiter Außenleiter, und die beliebige weitere Leitung ebenfalls der Neutralleiter. Mit anderen Worten: In einer Gleichstromversorgung wird eine zweite Gleichstromleitung, d.h. ein zusätzlicher Außenleiter mit z.B. +24 V vorgesehen. Die erste Version eines redundanten Datentelegramms wird dann vorteilhafterweise auf das Potential zwischen erstem Außenleiter und Neutralleiter, die zweite Version auf das Potential zwischen zweitem Außenleiter und Neutralleiter moduliert bzw. von dort demoduliert. Hierdurch ergeben sich unabhängige Signalkanäle für die redundanten Signale.

In noch weiterer vorteilhafter Ausgestaltung ist das jeweilige Modul dazu ausgebildet, eine Plausibilitätskontrolle der redundanten Signale durchzuführen. Plausibilitätskontrolle bedeutet in diesem Zusammenhang allgemein, dass die beiden Datentelegramme einen schalttechnisch identischen Informationsgehalt haben, d.h. dass z.B. beide Datentelegramme einen identischen Schaltzustand eines Schalters anzeigen. Tun sie dies nicht, muss notgedrungen ein Fehler vorliegen, da der Schalter nur einen einzigen Schaltzustand haben kann.

Dass zwei Versionen eines Datentelegramms redundant sind und damit den gleichen Informationsgehalt haben sollen, bedeutet dabei allerdings nicht zwingend, dass die Datentelegramme identisch sind. In der Sicherheitstechnik können nämlich z.B. auch antivalente Signale übermittelt werden, wenn die Plausibilitätskontrolle auf eine solche Antivalenz eingerichtet ist. Antivalenz bedeutet, dass zu einem gegebenen Zeitpunkt die Signale/Datentelegramme genau gegengleich sind, d.h. z.B. 0 und 1. Auch andere Abwandlungen der Signale/Datentelegramme sind möglich, solange bei der Plausibilitätskontrolle bekannt ist, welcher Art diese Abwandlungen sind. Die Plausibilitätskontrolle erfolgt somit immer vor dem Hintergrund zusätzlicher hinterlegter Informationen bezüglich der schalttechnischen Zuordnung oder Bedeutung des Signals/Datentelegramms.

Die mit der Erfindung erzielten Vorteile bestehen insbesondere darin, dass durch die Verwendung der Stromversorgungsleitungen der Module einer SPS als Datenübertragungsleitung im Wege der Trägerfrequenztechnik eine besonders hohe Datenübertragungsgeschwindigkeit erzielt und eine besonders hohe Anzahl von Modulen ermöglicht wird. Dadurch wird Intelligenz in den einzelnen Modulen eingespart und zentralisiert. Zudem kann der Anwender die Module auch dezentral einsetzen und ist hinsichtlich ihrer Anordnung, auch innerhalb einer Modulreihe, flexibel.

Ferner besteht der Vorteil, dass man die Reaktionszeiten von einem Signaleingang auf einem Erweiterungsmodul, der Verarbeitung des Signals im Kopfmodul und bis zum Signalausgang auf einem Erweiterungsmodul deutlich verkürzen kann. Ein weiterer Vorteil ist, dass die Intelligenz bzw. Vorverarbeitung der Signale nicht dezentral auf dem Modul sondern zentral auf dem Kopfmodul erfolgen kann. In heutigen Erweiterungsmodulen erfolgt fast die gesamte Datenverarbeitung wegen des langsamen Rückwandbusses lokal auf dem Erweiterungsmodul, weshalb diese technisch aufwändig und teuer sind.

Ausführungsbeispiele der Erfindung werden anhand von Zeichnungen näher erläutert. Darin zeigen:
- FIG 1: eine modulare speicherprogrammierbare Steuerung mit interner Datenübertragung zwischen den Modulen mittels Trägerfrequenztechnik,
- FIG 2: eine Sicherheitssteuerung mit sicherer interner Datenübertragung zwischen den Modulen mittels Trägerfrequenztechnik auf Modulationsbasis, Frequenzbasis oder Protokollbasis, und
- FIG 3: eine Sicherheitssteuerung mit sicherer interner Datenübertragung zwischen den Modulen mittels Trägerfrequenztechnik auf Hardwarebasis.

Gleiche Teile sind in allen Zeichnungen mit denselben Bezugszeichen versehen.

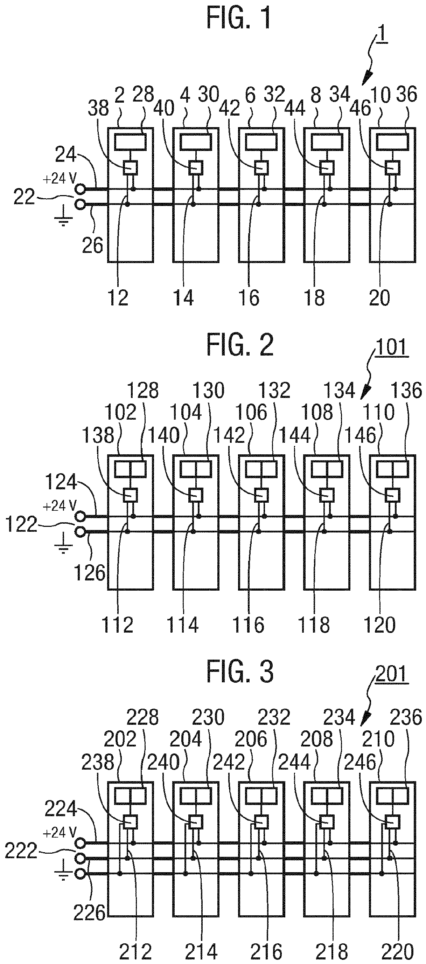

Die FIG 1 zeigt schematisch eine modulare speicherprogrammierbare Steuerung 1, umfassend ein Kopfmodul 2, mehrere Erweiterungsmodule 4, 6, 8, die in üblicher Weise z.B. zusätzliche, nicht näher dargestellte Ein- und Ausgangsklemmen bereitstellen, sowie ein Kommunikationsmodul 10, welches eine ebenfalls nicht näher dargestellte Kommunikationsschnittstelle zu einem Feldbussystem aufweist. Alle Module 2, 4, 6, 8, 10 sind über eine nicht näher dargestellte Steckverbindung in einer Modulreihe miteinander verbunden und werden z.B. in einem Schaltschrank angeordnet. Über Stromversorgungsanschlüsse 12, 14, 16, 18, 20 sind die Module 2, 4, 6, 8, 10 mit einer gemeinsamen Stromversorgung 22 im Schaltschrank verbunden, die einen +24 V-Gleichstrom-Außenleiter 24 und einen geerdeten Neutralleiter 26 umfasst. Über diese Leitungen 24, 26 werden die Module 2, 4, 6, 8, 10 mit Strom versorgt.

Im Kopfmodul 2 ist eine zentrale Steuereinheit 28 angeordnet, die logische Eingangssignale verarbeitet und daraus anhand einer durch ein Benutzerprogramm vorgegebenen Logikprogrammierung logische Ausgangssignale erzeugt. Hierfür ist auf der Steuereinheit 28 eine geeignete Firmware hinterlegt und das Kopfmodul 2 weist eine nicht näher dargestellte Schnittstelle zum Empfang der Logikprogrammierung auf, die auf einem externen Gerät, z.B. einem Personal Computer erstellt wurde. Die Steuereinheit 28 ist als Mikrocontroller ausgebildet.

In den Erweiterungsmodulen 4, 6, 8 ist ebenfalls jeweils eine Steuereinheit 30, 32, 34 hinterlegt. In den beiden ersten Erweiterungsmodulen 4, 6 enthält diese eine geeignete Firmware, die die an den Eingangsklemmen anliegenden physikalischen Signale in logische Signale umsetzt. Weiterhin setzt die Firmware logische Ausgangssignale mittels entsprechender Ausgangstreiber in physikalische Signale an den Ausgangsklemmen um. Im letzten Erweiterungsmodul 8 hingegen findet keine Umsetzung in logische Signale statt, sondern die physikalischen, analogen Signale werden direkt für die Modulation bereitgestellt. Das Kommunikationsmodul 10 schließlich weist eine Steuereinheit 36 auf, die als Schnittstelle zwischen der internen Signalisierung der Steuerung 1 und der externen Signalisierung auf dem Feldbus dient.

Für die interne Kommunikation der Module 2, 4, 6, 8, 10 bzw. deren Steuereinheiten 28, 30, 32, 34, 36 untereinander müssen die jeweiligen logischen oder physikalischen Signale von Modul 2, 4, 6, 8, 10 zu Modul 2, 4, 6, 8, 10 transportiert werden. Hierfür weist jedes Modul 2, 4, 6, 8, 10 eine Modulationsvorrichtung 38, 40, 42, 44, 46 auf, die einerseits jeweils mit der Steuereinheit 28, 30, 32, 34, 36, andererseits jeweils mit den Leitungen 24, 26 über den jeweiligen Stromversorgungsanschluss 12, 14, 16, 18, 20 verbunden sind. Zu sendende Signale werden in der Modulationsvorrichtung 38, 40, 42, 44, 46 als Datentelegramme auf das Potential zwischen den Leitungen 24, 26 mittels des Trägerfrequenzverfahrens aufmoduliert, zu empfangende Signale werden von den Leitungen 24, 26 demoduliert. Im Falle der physikalischen Signale des letzten Erweiterungsmoduls 8 werden diese im Kopfmodul 2 demoduliert und in logische Signale umgesetzt. Hier findet die Vorverarbeitung also erst im Kopfmodul 2 statt. Auf den Leitungen 24, 26 werden somit aufmodulierte Datentelegramme zwischen den Modulen 2, 4, 6, 8, 10 ausgetauscht, die sämtlichen Datenaustausch zwischen den Modulen 2, 4, 6, 8, 10 darstellen, d.h. logische Eingangs- und Ausgangssignale, physikalische Eingangssignale, Steuersignale, Kommunikationssignale etc.

Die Modulation und Demodulation erfolgt jeweils im OFDM-Verfahren, welches eine besonders hohe Datenrate erlaubt. In der Regel wird die Übertragung der Datentelegramme dabei in der Art einer Master/Slave-Architektur erfolgen, wobei das Kopfmodul 2 als Master fungiert, während die übrigen Module 2, 4, 6, 8 als Slaves fungieren.

Die FIG 2 und FIG 3 zeigen alternative Ausführungsbeispiele, die jeweils nur anhand ihrer Unterschiede zum Ausführungsbeispiel der FIG 1 erläutert werden.

Zunächst sind die speicherprogrammierbaren Steuerungen 101, 201 der FIG 2 und 3 als Sicherheitssteuerungen ausgebildet. Sie sind gemäß der Norm EN ISO 13849 ausgestaltet, so dass jede Steuereinheit 128, 130, 132, 134, 136, 228, 230, 232, 234, 236 jeweils zwei redundant arbeitende Mikrocontroller umfasst. Die Sicherheit wird dabei durch Zweikanaligkeit, d.h. durch überprüfte Redundanz gewährleistet. Hierzu werden beim jeweiligen Sender redundante Signale zur Verfügung gestellt. Steuersignale, die im Kopfmodul 12, 22 erzeugt werden, werden z.B. in zwei Versionen unabhängig von den zwei Mikroprozessoren erzeugt und über den an die übrigen Module 104, 106, 108, 110, 204, 206, 208, 210 weitergegeben. Auf Seiten übrigen Module 104, 106, 108, 110, 204, 206, 208, 210 können die redundanten Signale ebenso unabhängig erzeugt werden, z.B. durch zwei unabhängige Leitungen eines zweikanaligen Not-Aus-Schalters.

Die auf diese Weise zur Verfügung gestellten redundanten Signale werden vor und/oder nach ihrer Aufmodulation zyklisch auf Plausibilität kontrolliert. Hierzu sind in den Mikrocontrollern ggf. Zusatzinformationen hinterlegt. So könnte ein Not-Aus-Schalter z.B. antivalente Signale zur Verfügung stellen, die im fehlerfreien Fall nicht gleich, sondern vielmehr stets unterschiedlich sein müssen. Die Signale werden auf Seiten des jeweiligen Senders an die jeweilige Modulationsvorrichtung 138, 140, 142, 144, 146, 238, 240, 242, 244, 246 gegeben bzw. auf Seiten des jeweiligen Empfängers von dort empfangen.

Die Ausführungsbeispiele der FIG 2 und 3 unterscheiden sich nun in der Art der Übertragung der redundanten Datentelegramme. In der Steuerung 101 der FIG 2 existieren nur zwei Leitungen 124, 126. Die sichere Datenübertragung erfolgt hier mittels entsprechend geeigneter Sicherheitsprotokolle wie z.B. CIP Safety, FSoE oder PROFIsafe. In Ausführungsbeispielen können die redundanten Datentelegramme auch über unterschiedliche Trägerfrequenzen übertragen werden, oder es können unterschiedliche Modulationsverfahren oder unterschiedliche Feldbusprotokolle für die redundanten Datentelegramme verwendet werden.

In der Steuerung 21 der FIG 3 hingegen ist ein zusätzlicher 24 V-Gleichstrom-Außenleiter 225 vorgesehen. Hierbei umfassen die Modulationsvorrichtungen 238, 240, 242, 244, 246 je zwei nicht näher gezeigte Modulationseinheiten. Jeweils eines der redundanten Signale wird dabei an eine der Modulationseinheiten gegeben und in ein Datentelegramm übersetzt, welches auf die Leitungen 224, 225, 226 aufmoduliert wird. Hierbei sind die Modulationsvorrichtungen 238, 240, 242, 244, 246 so ausgestaltet, dass die einzelnen Modulationseinheiten einer Modulationsvorrichtung 238, 240, 242, 244, 246 auf unterschiedliche Leitungen bzw. Potentiale zwischen diesen Leitungen wirken. So ist jeweils die erste Modulationseinheit jeder Modulationsvorrichtung 238, 240, 242, 244, 246 mit dem Außenleiter 224 und dem Neutralleiter 226 verbunden. Die jeweils zweite Modulationseinheit ist mit dem Außenleiter 225 und dem Neutralleiter 226 verbunden. Damit werden die redundanten Versionen des Datentelegramms jeweis auf unterschiedliche Potentiale aufmoduliert und haben daher unabhängige Übertragungswege.

### Bezugszeichenliste

1 Sicherheitssteuerung
2 Kopfmodul
4, 6, 8 Erweiterungsmodul
10 Kommunikationsmodul
12, 14, 16,
18, 20 Stromversorgungsanschluss
22 Stromversorgung
24 Außenleiter
26 Neutralleiter
28, 30, 32,
34, 36 Steuereinheit
38, 40, 42,
44,46 Modulationsvorrichtung
101 Sicherheitssteuerung
102 Kopfmodul
104, 106,
108 Erweiterungsmodul
110 Kommunikationsmodul
112,114,116,
118, 120 Stromversorgungsanschluss
122 Stromversorgung
124 Außenleiter
126 Neutralleiter
128, 130, 132,
134, 136 Steuereinheit
138, 140, 142,
144, 146 Modulationsvorrichtung
201 speicherprogrammierbare Ssteuerung
202 Kopfmodul
204,206,
208 Erweiterungsmodul
210 Kommunikationsmodul
212, 214, 216,
218, 220 Stromversorgungsanschluss
222 Stromversorgung
224, 225 Außenleiter
226 Neutralleiter
228, 230, 232,
234, 236 Steuereinheit
238, 240, 242,
244, 246 Modulationsvorrichtung

## Patentansprüche

1. Modulare speicherprogrammierbare Steuerung (1, 101, 201), umfassend eine Mehrzahl von Modulen (2, 4, 6, 8, 10, 102, 104, 106, 108, 110, 202, 204, 206, 208, 210), wobei die Module (2, 4, 6, 8, 10, 102, 104, 106, 108, 110, 202, 204, 206, 208, 210)zum Austausch von Datentelegrammen untereinander ausgebildet sind, wobei die Module (2, 4, 6, 8, 10, 102, 104, 106, 108, 110, 202, 204, 206, 208, 210) jeweils einen Stromversorgungsanschluss (12, 14, 16, 18, 20, 112, 114, 116, 118, 120, 212, 214, 216, 218, 220) aufweisen, und wobei die Module (2, 4, 6, 8, 100, 102, 104, 106, 108, 110, 202, 204, 206, 208, 210) jeweils eine Modulationsvorrichtung (38, 40, 42, 44, 46, 138, 140, 142, 144, 146, 238, 240, 242, 244, 246) aufweisen, die zum Modulieren und Demodulieren der Datentelegramme über eine Trägerfrequenz auf eine Spannung zwischen zwei Leitungen (24, 26, 124, 126, 224, 225, 226) des Stromversorgungsanschlusses (12, 14, 16, 18, 20, 112, 114, 116, 118, 120, 212, 214, 216, 218, 220) ausgebildet ist.

2. Modulare speicherprogrammierbare Steuerung (1, 101, 201) nach Anspruch 1, wobei die Mehrzahl von Modulen (2, 4, 6, 8, 10, 102, 104, 106, 108, 110, 202, 204, 206, 208, 210) wenigstens ein Kopfmodul (2, 102, 202) umfasst, das einen Prozessor (28, 128, 228) aufweist, der logische Eingangssignale von Sensoren verknüpft und logische Ausgangssignale für Aktoren erzeugt.

3. Modulare speicherprogrammierbare Steuerung (1, 101, 201) nach Anspruch 1 oder 2, wobei die Mehrzahl von Modulen (2, 4, 6, 8, 10, 102, 104, 106, 108, 110, 202, 204, 206, 208, 210) wenigstens ein Erweiterungsmodul (4, 6, 8, 104, 106, 108, 204, 206, 208) umfasst, das eine Anzahl von Anschlussklemmen aufweist und an den Anschlussklemmen erfasste physikalische Eingangssignale von Sensoren in logische Eingangsignale umsetzt und/oder an den Anschlussklemmen physikalische Ausgangssignale aus logischen Ausgangssignalen erzeugt.

4. Modulare speicherprogrammierbare Steuerung (1, 101, 201) nach Anspruch 2 oder 3, bei der die Datentelegramme die logischen Eingangssignale und/oder logischen Ausgangssignale enthalten.

5. Modulare speicherprogrammierbare Steuerung (1, 101, 201) nach einem der vorhergenden Ansprüche, wobei die Mehrzahl von Modulen (2, 4, 6, 8, 10, 102, 104, 106, 108, 110, 202, 204, 206, 208, 210) wenigstens ein Erweiterungsmodul (4, 6, 8, 104, 106, 108, 204, 206, 208) umfasst, das eine Anzahl von Anschlussklemmen aufweist und an den Anschlussklemmen erfasste physikalische Eingangssignale mittels der Modulationsvorrichtung (38, 40, 42, 44, 46, 138, 140, 142, 144, 146, 238, 240, 242, 244, 246) in die Datentelegramme moduliert, wobei die Datentelegramme die physikalischen Eingangssignale enthalten, und wobei die Mehrzahl von Modulen (2, 4, 6, 8, 10, 102, 104, 106, 108, 110, 202, 204, 206, 208, 210) wenigstens ein Kopfmodul (2, 102, 202) umfasst, das einen Prozessor (28, 128, 228) aufweist, der die aus den Datentelegrammen demodulierten physikalischen Eingangssignale in logische Eingangsignale umsetzt.

6. Modulare speicherprogrammierbare Steuerung (1, 101, 201) nach einem der vorhergehenden Ansprüche, bei der die Mehrzahl von Modulen (2, 4, 6, 8, 10, 12, 14, 16, 18, 110, 22, 24, 26, 28, 210) wenigstens ein Kommunikationsmodul (10, 110, 210) umfasst, das eine Kommunikationsschnittstelle für Kommunikationssignale zu und von einem Feldbussystem aufweist.

7. Modulare speicherprogrammierbare Steuerung (1, 101, 201) nach Anspruch 6, bei der die Datentelegramme die Kommunikationssignale zu und von dem Feldbussystem enthalten.

8. Modulare speicherprogrammierbare Steuerung (1, 101, 201) nach einem der vorhergehenden Ansprüche, wobei die Module (2, 4, 6, 8, 10, 12, 14, 16, 18, 110, 22, 24, 26, 28, 210) in einer Modulreihe angeordnet sind.

9. Modulare speicherprogrammierbare Steuerung (1, 101, 201) nach einem der vorhergehenden Ansprüche, bei der die jeweilige Modulationsvorrichtung (38, 40, 42, 44, 46, 138, 140, 142, 144, 146, 238, 240, 242, 244, 246) zum Modulieren und Demodulieren mittels des Orthogonalen Frequenzmultiplexverfahrens ausgebildet ist.

10. Modulare speicherprogrammierbare Steuerung (101, 201) nach einem der vorhergehenden Ansprüche, ausgebildet zum gemäß einer Sicherheitsnorm sicheren Ein- und Ausschalten eines elektrischen Verbrauchers.

11. Modulare speicherprogrammierbare Steuerung (101) nach Anspruch 10, bei der die Datentelegramme nach einem gemäß der Sicherheitsnorm sicheren Datenprotokoll ausgebildet sind.

12. Modulare speicherprogrammierbare Steuerung (201) nach Anspruch 10, bei der der Stromversorgungsanschluss (212, 214, 216, 218, 220) mindestens drei Leitungen (224, 225, 226) umfasst, und die Modulationsvorrichtung (238, 240, 242, 244, 246) dazu ausgebildet ist, eine erste von zwei redundanten Versionen eines Datentelegramms auf eine Spannung zwischen einer ersten Leitung (224, 225, 226) und einer zweiten Leitung (224, 225, 226) des Stromversorgungsanschlusses (212, 214, 216, 218, 220) zu modulieren und/oder aus einer solchen Spannung zu demodulieren, und eine zweite Version des Datentelegramms auf eine Spannung zwischen einer dritten Leitung (224, 225, 226) und einer beliebigen weiteren Leitung (224, 225, 226) des Stromversorgungsanschlusses (212, 214, 216, 218, 220) zu modulieren und/oder aus einer solchen Spannung zu demodulieren.

13. Modulare speicherprogrammierbare Steuerung (101, 201) nach Anspruch 12, bei der der Stromversorgungsanschluss (112, 114, 116, 118, 120, 212, 214, 216, 218, 220) als Gleichstromversorgungsanschluss ausgelegt ist und die erste Leitung ein erster Außenleiter (224) ist, die zweite Leitung ein Neutralleiter (226) ist, die dritte Leitung ein zweiter Außenleiter (224) ist, und die beliebige weitere Leitung ebenfalls der Neutralleiter (226) ist.

14. Modulare speicherprogrammierbare Steuerung (101, 201) nach Anspruch 12 oder 13, bei der das jeweilige Modul (102, 104, 106, 108, 110, 202, 204, 206, 208, 210) dazu ausgebildet ist, eine Plausibilitätskontrolle der redundanten Signale durchzuführen.
